# EUROPEAN PATENT APPLICATION

(11) **EP 4 660 479 A1**
(43) Date of publication of application: **10.12.2025**
(21) Application number: 24180545.6
(22) Date of filing: 06.06.2024
(51) Int. Cl.: F16H 1/08, F16H 55/08, F16H 55/17

(54) **CYLINDRICAL GEAR**

(71) Applicant: Ostbayerische Technische Hochschule Regensburg, in Vertretung des Freistaates Bayern, 93053 Regensburg (DE)
(72) Inventor: Niedermeier, Corinna, 94315 Straubing (DE); Wagner, Andreas, 93342 Saal an der Donau (DE)
(74) Representative: Lucke, Andreas

(57) **Abstract**

A cylindrical gear comprises a cylindrical pitch surface and teeth arranged along the cylindrical pitch surface. The cylindrical pitch surface corresponds to a lateral surface of a cylinder, defining a circumferential direction and a width of said lateral surface. The cylindrical pitch surface comprises a first section. The first section is spanned by the circumferential direction and a first section of the width of the cylindrical pitch surface. Each tooth of said teeth comprises a first flank line on a first side of the tooth, and a second flank line on a second side of the tooth opposite to the first side. The first flank line is curved with a first curvature and the second flank line is curved with a second curvature. Each of the first curvature and the second curvature is non-constant and comprises at least one inflection point at which the sign of the respective curvature changes between a negative, clockwise curvature and a positive, counterclockwise curvature. In the first section, the first curvature and the second curvature have identical signs.

## Description

### TECHNICAL FIELD

The disclosure relates to a cylindrical gear, in particular to a cylindrical gear with curved flank lines, such as to achieve an improved stress/strain distribution within the gear and to reduce noise and wear during operation.

### BACKGROUND

A gear, also referred to as a gearwheel, is a machine element commonly used in transmission technology. Gears and gear trains, also referred to as gear boxes, are important in various fields of application. The purpose of a gear train is to translate and transmit torque and speed. Different types of gear trains for this purpose are known from the prior art. The areas of application for gear trains are diverse and range from the automotive industry to mechanical and plant engineering, energy technology and medical technology as well as in household appliances and industrial machinery (e.g. testing and recording machines), to name just a few examples. The specific requirements vary depending on the application, which may be focused on the transmission of power or rotary motion without slippage at a constant transmission ratio, the conversion of torque and speed, or a change in the direction of rotation.

Gear trains serve to control kinematic-dynamic variables (speed, direction of rotation, torque), position of the drive to the output (center distance, angular position between input and output), and/or to divide or combine mechanical power. The transmission of torque may be adjusted by selecting a suitable ratio of the number of teeth and the pitch circle diameter. Gearwheels implement a power transmission between two aligned shafts using a form fit between the gears.

Cylindrical gears pose the type of gears most commonly applied in gear trains. Typically, their tooth profile is optimized according to the requirements of a specific application, which may, for example, require a high load-bearing capacity or insensitivity to manufacturing deviations.

Even though significant efforts have been made to optimize the shapes of cylindrical gears, further improvements are desirable to improve, for example, noise and wear during operation.

### OVERVIEW

In view of the technical problems laid out above, there is a need for an improved cylindrical gear. This objective is achieved with the cylindrical gear according to claim 1, a gear train according to claim 12, and a method according to claim 13 of operating the gear train. The dependent claims refer to advantageous embodiments.

According to a first aspect, a cylindrical gear comprises a cylindrical pitch surface and teeth arranged along the cylindrical pitch surface. The cylindrical pitch surface corresponds to a lateral surface of a cylinder, defining a circumferential direction and a width of said lateral surface. The cylindrical pitch surface comprises a first section. The first section is spanned by the circumferential direction and a first section of the width of the cylindrical pitch surface. Each tooth of said teeth comprises a first flank line on a first side of the tooth, and a second flank line on a second side of the tooth opposite to the first side. The first flank line is curved with a first curvature and the second flank line is curved with a second curvature. Each of the first curvature and the second curvature is non-constant and comprises at least one inflection point at which the sign of the respective curvature changes between a negative, clockwise curvature and a positive, counterclockwise curvature. In the first section, the first curvature and the second curvature have identical signs.

The inventors have realized that a respective cylindrical gear produces a surprisingly low noise during operation, for example in comparison to a herringbone gear (also referred to as double helical gear), in particular, when respective cylindrical gears mesh in a gear train.

Moreover, the cylindrical gear suffers a surprisingly low wear during operation, for example in comparison to a herringbone gear, in particular, when respective cylindrical gears mesh in a gear train.

The inventors have found from simulations that the stress/strain distribution during operation within the cylindrical gear is significantly more homogeneous than in a conventional gear, such as a herringbone gear, avoiding the high local stress/strain values which occur in the latter. This improved stress/strain distribution give rise to the reduced noise and wear during operation.

The local stress/strain values and the reduced wear and noise during operation are related to the at least one inflection point of the first curvature and the second curvature, which produces flank lines with flat segments (e.g., in the first section) connected by at least one steeper segment, which typically comprises the inflection point. Within the context of this disclosure, the terms "flat" and "steep" refer to the slope of the respective flank line, indicating the deviation of the respective flank line from the straight flank line of a conventional spur gear serving as a reference. In other words, the flank lines of a conventionally spur gear is perfectly flat, whereas, for example, the flank line of a herring bone gear would have a significantly larger and constant slope. In yet other words, the slope of the first/second flank line refers to the derivative of the respective flank line with respect to the width direction or to a direction of the axis of the cylindrical gear, respectively.

When respective cylindrical gears mesh, the flat segments can efficiently transfer forces between the respective cylindrical gears using a significant fraction of the width of the gear, resulting in the improved stress/strain distribution. The curved shape of the flank lines thus avoids high local stress/strain, which may, for example, occur in a herringbone gear.

The steeper segment, which typically comprises the at least one inflection point, ensures a significant circumferential extension of the teeth. This significant circumferential extension enhances the contact ratio (i.e., the average number of teeth in contact with the teeth of a meshing gear) and thus causes a reduced noise during operation.

Surprisingly, the shape of the cylindrical gear, as illustrated above in terms of the cylindrical pitch surface, the first section, the flank lines and their respective curvatures, reduces both the wear and the noise during operation. Conventional gears aim at either providing a large contact area for avoiding high local stress/strain and reducing wear, or at enhancing the contact ratio to reduce noise. Surprisingly, the cylindrical gear according to this disclosure provides both a reduced local stress/strain and a noise reduction, without compromising between the two advantages.

According to some embodiments, the cylindrical pitch surface comprises at least one second section of the cylindrical pitch surface. In respective embodiments, each of the at least one second section is spanned by the circumferential direction and a respective second section of the width of the cylindrical pitch surface. Moreover, in respective embodiments, the second section of the width is non-overlapping with the first section of the width, for example for each one of the at least one second sections. In respective embodiments, in the at least one second section, the first curvature and the second curvature may have identical signs; and the sign of the first curvature and of the second curvature in the at least one second section is opposite to the sign of the first curvature and of the second curvature in the first section.

The respective shape further improves the stress/strain distribution within the cylindrical gear during operation, giving rise to the advantages laid out above.

In respective embodiments, the second section of the width of the cylindrical pitch surface may optionally extend from a first inflection point of the first flank line and/or of the second flank line to another inflection point of the respective flank line, or, if, for a given direction from the first inflection point, no other inflection point of the respective flank line exists, to an edge of the cylindrical pitch surface.

The first inflection point and, if existent, the other inflection point may be excluded from the second section of the width.

The cylindrical pitch surface may comprise at least two of said at least one second sections, wherein, along the width of the cylindrical pitch surface, the at least two second sections are arranged on opposite sides of the first section.

The cylindrical gear may further comprise a reference plane, wherein the reference plane is perpendicular to an axis of the cylindrical gear and intersects the cylindrical gear at half the width of the cylindrical pitch surface.

At least one inflection point of the first curvature and/or of the second curvature may be arranged on the reference plane.

Respective flank lines enhance the symmetry of the teeth and minimize the thrust on a shaft that the cylindrical gear is mounted on.

The first curvature and/or the second curvature may comprise several of said at least one inflection points, and the several inflection points of the first curvature and/or of the second curvature may be arranged symmetrically about the reference plane.

Respective flank lines enhance the symmetry of the teeth and minimize the thrust on a shaft that the cylindrical gear is mounted on.

The first curvature and/or the second curvature may be asymmetric about the reference plane, such that a thrust is generated along the axis of the cylindrical gear when the cylindrical gear is enmeshed coaxially with a second, identical cylindrical gear and rotated.

Respective embodiments may be used to generate a predetermined thrust onto a shaft supporting the cylindrical gear, and ultimately onto a bearing that the shaft is mounted to. The respective thrust beneficially improves the operation of the cylindrical gear in combination with specific kinds of bearings such as ball bearings or roller bearings.

The first curvature in the first section may be antisymmetrical about the reference plane to the first curvature in the second section.

The second curvature in the first section may be antisymmetrical about the reference plane to the second curvature in the second section.

The first flank line and the second flank line of each tooth of the teeth may be parallel to each other, for example, in the first section and/or in at least one or all of the at least one second section, or along at least 80% of the width of the cylindrical pitch surface, or along at least 90% of the width of the cylindrical pitch surface, or along the entire width of the cylindrical pitch surface.

Alternatively, or in addition, the first section of the width of the cylindrical pitch surface may extend from a second inflection point of the first flank line or of the second flank line to another inflection point of the respective flank line, or, if, for a given direction from the second inflection point, no other inflection point of the respective flank line exists, to an edge of the cylindrical pitch surface. In respective embodiments, the second inflection point and, if existent, the other inflection point are excluded from the first section of the width.

The first flank line and/or the second flank line may comprise at least two local extrema, in particular at least two strict local extrema.

The first curvature and/or the second curvature may comprise at least two inflection points or at least three inflection points.

At least one or all of the at least one inflection point of the first flank line of each tooth of the teeth may be located at a distance from the edges of the cylindrical pitch surface, preferably at a distance of at least 3% or of at least 5% or of at least 10% of the width of the cylindrical pitch surface.

At least one or all of the at least one inflection point of the second flank line of each tooth of the teeth may be located at a distance from the edges of the cylindrical pitch surface, preferably at a distance of at least 3% or of at least 5% or of at least 10% of the width of the cylindrical pitch surface.

The first flank line of each tooth of the teeth may have a first slope changing along the first flank line, and the second flank line of each tooth of the teeth may have a second slope changing along the second flank line, wherein the first slope and/or the second slope have their/has its maximum at a distance from the edges of the cylindrical pitch surface, preferably at a distance of at least 3% or of at least 5% or of at least 10% of the width of the cylindrical pitch surface.

The first flank line of each tooth of the teeth may have a first total circumferential extension, the first total circumferential extension corresponding to the largest separation along the circumferential direction between any two points on the first flank line.

The second flank line of each of the teeth may have a second total circumferential extension, the second total circumferential extension corresponding to the largest separation along the circumferential direction between any two points on the second flank line.

According to some embodiments, the first total circumferential extension and/or the second total circumferential extension amount(s) to at least one percent of the width of the cylindrical pitch surface or to at least two percent of the width of the cylindrical pitch surface or to at least three percent of the width of the cylindrical pitch surface or to at least five percent of the width of the cylindrical pitch surface.

According to some embodiments, the first flank line of each tooth of the teeth has a first local circumferential extension associated with the first section, the first local circumferential extension corresponding to the largest separation along the circumferential direction between any point on the first flank line within the first section and the inflection point of the first flank line closest to the respective point on the first flank line. In respective embodiments, the second flank line of each tooth of the teeth has a second local circumferential extension associated with the first section, the second local circumferential extension corresponding to the largest separation along the circumferential direction between any point on the second flank line within the first section and the inflection point of the second flank line closest to the respective point on the second flank line; and the first local circumferential extension and/or the second local circumferential extension amount(s) to at least one percent of the first section of the width of the cylindrical pitch surface or to at least two percent of the first section of the width of the cylindrical pitch surface or to at least three percent of the first section of the width of the cylindrical pitch surface or to at least five percent of the first section of the width of the cylindrical pitch surface.

According to some embodiments, wherein the cylindrical gear comprises the at least one second section described above, for any of the at least one second section, the first flank line of each tooth of the teeth may have a third local circumferential extension associated with the respective second section, the respective third local circumferential extension corresponding to the largest separation along the circumferential direction between any point on the first flank line within the respective second section and the inflection point of the first flank line closest to the respective point on the first flank line. In respective embodiments, for any of the at least one second section, the second flank line of each tooth of the teeth has a fourth local circumferential extension associated with the respective second section, the respective fourth local circumferential extension corresponding to the largest separation along the circumferential direction between any point on the second flank line within the respective second section and the inflection point of the second flank line closest to the respective point on the second flank line; and the third local circumferential extension(s) and/or the fourth local circumferential extension(s) associated with one or all of the at least one second section amount(s) to at least two percent of the second section of the width of the cylindrical pitch surface associated with the corresponding second section(s), or to at least three percent of the second section of the width of the cylindrical pitch surface associated with the corresponding second section(s), or to at least five percent of the second section of the width of the cylindrical pitch surface associated with the corresponding second section(s).

The cylindrical pitch surface may be arranged between an inner diameter and an outer diameter of the cylindrical gear, such as halfway in between the inner diameter and the outer diameter of the cylindrical gear.

The first flank line may be a left flank line, and the second flank line may be a right flank line.

The first curvature and/or the second curvature may be determined according to a projection of the respective flank line of the respective tooth onto the cylindrical pitch surface. In respective embodiments, the projection onto the cylindrical pitch surface may optionally be a projection along a radial direction of the cylindrical gear or a projection along a cartesian direction perpendicular to an axis of the cylindrical gear; preferably a projection along a radial direction of the cylindrical gear perpendicular to an axis of the cylindrical gear and perpendicular to the circumferential direction at each point of the cylindrical pitch surface.

The first curvature and the second curvature maybe determined along a direction from a same, first edge of the cylindrical pitch surface to the same, opposite edge of the cylindrical pitch surface, for example according to said projection onto the cylindrical pitch surface.

The first flank line and/or the second flank line may refer to an intersection curve between a side wall on the respective side of the respective tooth and the cylindrical pitch surface.

The first flank line and/or the second flank line may refer to a boundary curve between a flank on the respective side of the respective tooth and a face on the respective side of the respective tooth.

According to some embodiments, the first flank line and/or the second flank line have/has a shape reflecting a polynomial function, preferably with a deviation between the polynomial function and the shape of the first flank line and/or of the second flank line of no more than 20% or of no more than 10% or of no more than 5% of the first total circumferential extension and/or of the second total circumferential extension and/or of the first local circumferential extension and/or of the second local circumferential extension, for example wherein the polynomial function is of an order of no more than 6 or of no more than 5 or of no more than 4 and/or wherein the polynomial function is of an order of at least 2 or of at least 4.

According to some embodiments, the first flank line and/or the second flank line have/has a shape reflecting a sine function or a cosine function or a sum of the sine function and the cosine function, preferably with a deviation between the sine function or the cosine function or the sum of the sine function and the cosine function and the shape of the first flank line and/or of the second flank line of no more than 20% or of no more than 10% or of no more than 5% of the first total circumferential extension and/or of the second total circumferential extension and/or of the first local circumferential extension and/or of the second local circumferential extension.

A second aspect refers to a gear train. The gear train comprises a plurality of cylindrical gears, the plurality of cylindrical gears comprising a first cylindrical gear and a second cylindrical gear. Each of the first cylindrical gear and the second cylindrical gear is a cylindrical gear as described above. The first cylindrical gear and the second cylindrical gear are arranged such that they intermesh with each other.

According to some embodiments, a first axis of the first cylindrical gear is parallel to a second axis of the second cylindrical gear.

According to some embodiments, the first flank line of the first cylindrical gear is complementary to a first one of: the first flank line of the second cylindrical gear or the second flank line of the second cylindrical gear.

According to some embodiments, the second flank line of the first cylindrical gear is complementary to a second one of: the first flank line of the second cylindrical gear or the second flank line of the second cylindrical gear.

A third aspect refers to a method of using a gear train as described above. The method comprises rotating a shaft that the first cylindrical gear or the second cylindrical gear is mounted on.

According to some embodiments, the shaft is rotated such that an orientation of an axis of the shaft is perpendicular to the circumferential direction of the cylindrical pitch surface of the first cylindrical gear and/ or of the second cylindrical gear.

The method may further comprise generating, from the rotation of the shaft, a thrust onto the shaft along an axial direction of the shaft.

According to some embodiments of the method, a pitch line velocity of the first cylindrical gear and/or of the second cylindrical gear exceeds 25 m/s.

The method may further comprise a self-centering of the first cylindrical gear and/or the second cylindrical gear.

### BRIEF DESCRIPTION OF THE FIGURES

The techniques of the present disclosure and the advantages associated therewith will be best apparent from a description of exemplary embodiments in accordance with the accompanying drawings, in which:
- Fig. 1a: gives a perspective view of a cylindrical gear according to a first embodiment;
- Fig. 1b: gives a side view of the cylindrical gear according to the first embodiment;
- Fig. 1c: gives another side view of the cylindrical gear according to the first embodiment;
- Fig. 2a: gives a perspective view of a cylindrical gear according to a second embodiment;
- Fig. 2b: gives a side view of the cylindrical gear according to the second embodiment;
- Fig. 2c: gives another side view of the cylindrical gear according to the second embodiment;
- Fig. 3a: illustrates a cylindrical gear according to another embodiment;
- Fig. 3b: illustrates a cylindrical gear according to yet another embodiment;
- Fig. 3c: illustrates a cylindrical gear according to yet another embodiment;
- Fig. 4: illustrates an embodiment similar to the second embodiment and to the embodiment of Fig. 3b in further detail;
- Fig. 5a, Fig. 5b: illustrate gear trains according to two different embodiments;
- Fig. 6a, Fig. 6b: depict the stress/strain distribution in conventional gears during operation;
- Fig. 7a, Fig. 7b: depict the stress/strain distribution in cylindrical gears according to an embodiment during operation; and
- Fig. 8: illustrates a method according to an embodiment.

### DETAILED DESCRIPTION OF EMBODIMENTS

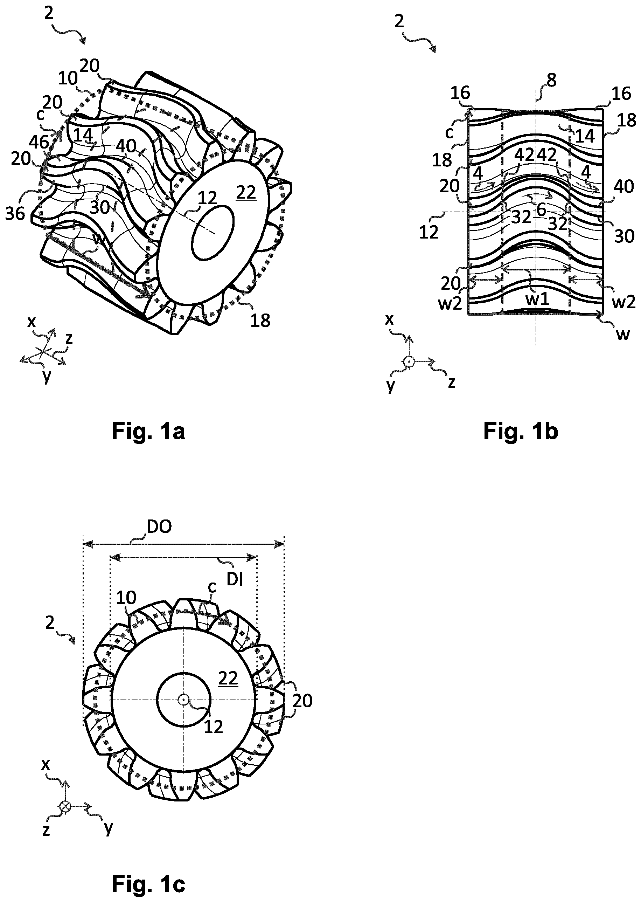

Fig. 1a, Fig. 1b, and Fig. 1c illustrate a cylindrical gear 2 according to a first embodiment. Fig. 1a gives a perspective view, Fig. 1b and Fig. 1c show side views.

The cylindrical gear 2 comprises teeth 20 arranged along a cylindrical pitch surface 10 of the cylindrical gear 2. The teeth 20 point away from the axis 12 of the cylindrical gear 2. In the depicted embodiment, the cylindrical gear 2 comprises twelve teeth 20. (For the sake of clarity, only few of them are indicated by reference numerals.) A different number of teeth is possible depending on the intended use of the cylindrical gear 2.

The cylindrical pitch surface 10 corresponds to a lateral surface of a cylinder, which is coaxial with the cylindrical gear 2, such as with the axis 12 of the cylindrical gear 2. The diameter of the cylindrical pitch surface 10 is in between the inner diameter DI and the outer diameter DO of the cylindrical gear 2. The cylindrical pitch surface 10 serves as a reference object, and is not a physical element of the cylindrical pitch surface 10, or of the cylindrical gear 2, respectively. Typically, the cylindrical pitch surface 10 is defined with a diameter corresponding to the average of the inner diameter DI and the outer diameter DO.

The inner diameter DI of the cylindrical gear 2 is defined by the diameter at the bottom land of the cylindrical gear 2. The outer diameter DO of the cylindrical gear 2 is defined by the diameter at the top land of the cylindrical gear 2.

The cylindrical pitch surface 10, or the corresponding lateral cylinder surface, respectively, defines a circumferential direction c and a width w thereof. The circumferential direction c corresponds to the azimuthal direction of the cylindrical pitch surface 10. It is perpendicular to the axis 12 of the cylindrical gear 2 and parallel to the cylindrical pitch surface 10 at each point of the cylindrical pitch surface 10. The width w is defined within the cylindrical pitch surface 10 along a direction parallel to the axis 12 of the cylindrical gear 2. In other words, the width is defined from one edge 18 of the cylindrical pitch surface 10 to the opposite edge 18 of the cylindrical pitch surface 10, in parallel to the axis 12 of the cylinder. In this sense, not only a numerical value, but also a direction is associated with the width w, as also indicated in Fig. 1a, Fig. 1b.

In the depicted embodiment, the teeth 20 are arranged on a body 22 of the cylindrical gear 2. In the depicted embodiment, the body 22 has a cylindrical outer lateral surface. The teeth 20 are arranged on the outer lateral surface of the body 22.

The teeth 20 extend away from the body 22 of the cylindrical gear 2, more specifically, from the outer lateral surface of the body 22. In the depicted embodiment, the inner diameter DI of the cylindrical gear 2 equals the diameter of the outer lateral surface of the body 22. The outer diameter DO of the cylindrical gear 2 equals the sum of the diameter of the outer lateral surface of its body 22 and twice the tooth height (wherein the tooth height is the sum of the addendum and the dedendum).

Each tooth 20 comprises a first side 36 and a second side 46, or a left side 36 and a right side 46, respectively. The respective sides 36, 46 correspond to opposite sides of the tooth 20 along the circumferential direction c, or along the azimuthal direction of the cylindrical pitch surface 10, respectively. In other words, the left side 36 (or first side 36, respectively) comprises the left face and the left flank (or the first face and the first flank, respectively) of the tooth 20, and the right side 46 (or the second side 46, respectively) comprises the right face and the right flank (or the second face and the second flank, respectively) of the tooth 20.

A first flank line 30 is associated with the first side 36. According to a possible definition, the first flank line 30 is the intersection curve between a side wall on the first side 36 of the tooth 20 and the cylindrical pitch surface 10. According to another possible definition, the first flank line 30 is the boundary curve between the first flank and the first face (i.e., between the flank and the face on the first side 36). According to yet another possible definition, the first flank line 30 is the edge of the top land of the tooth 20 towards the first side 36.

A second flank line 40 is associated with the first side 46. The definitions of the first flank line 30 apply correspondingly to the second flank line 40.

In the following, the shape of the tooth 20 is described in terms of the first flank line 30 and the second flank line 40. The first flank line 30 and the second flank line 40 of the cylindrical gear 2 according to the first embodiment exhibit a respective shape of the tooth 20 irrespective of which one of the definitions given above is used for the first flank line 30 and the second flank line 40. According to alternative embodiments (not shown), the first flank line 30 and the second flank line 40 exhibits a respective shape of the tooth 20 according to only one of the definitions given above, in particular only if the first flank line 30 and the second flank line 40 are defined as the intersection curves between the side walls on the respective sides 36, 46 of the tooth 20 and the cylindrical pitch surface 10.

The first flank line 30 is curved with a first curvature and the second flank line 40 is curved with a second curvature. The curvature can be defined mathematically as the second derivative of the respective flank line 30, 40 as it extends from one edge 18 of the cylindrical pitch surface 10 to the opposite edge 18 of the cylindrical pitch surface 10, i.e., the second derivative with respect to the direction of the width w.

The curvature has a value and a sign. The smaller the radius of curvature of the respective flank line 30, 40 is at a given point along the respective flank line 30, 40, the larger the value of the curvature at the respective point. The sign of the curvature reflects the direction of rotation of the respective flank line 30, 40 as it extends from one edge 18 of the cylindrical pitch surface 10 to the opposite edge 18 of the cylindrical pitch surface 10. For the sake of defining the sign of the curvature, all flank lines 30, 40 are to be followed along the same direction (i.e., positive z direction in the figures) along the axis 12. In other words, for the sake of defining the sign of the curvature, all flank lines 30, 40 are to be followed from the same edge 18 of the cylindrical pitch surface 10 to the same opposite edge 18 of the cylindrical pitch surface 10. In the example depicted in Fig. 1a, Fig. 1b, and Fig. 1c, the respective direction is defined as indicated by the direction of the width w, pointing from the left edge 18 in Fig. 1b towards the right edge 18 in Fig. 1b. Where, following this direction, the first/second flank line 30, 40 exhibits a counterclockwise curvature 4, the sign of the curvature is positive. In contrast, where, following this direction, the first/second flank line 30, 40 exhibits a clockwise curvature 6, the sign of the curvature is negative.

Each of the first curvature and the second curvature is non-constant. In other words, at least the value of the curvature of each of the first flank line 30 and the second flank line 40 changes as the respective flank line 30, 40 extends from one edge 18 of the cylindrical pitch surface 10 to the opposite edge 18 of the cylindrical pitch surface 10.

The direction of each of the first curvature and the second curvature changes between a negative, clockwise curvature 4 and a positive, counterclockwise curvature 6 as the respective flank line 30, 40 extends from one edge 18 of the cylindrical pitch surface 10 to the opposite edge 18 of the cylindrical pitch surface 10. In other words, each of the first and second flank line 30, 40 comprises at least one respective inflection point 32, 42, at which the curvature of the respective flank line 30, 40 changes between the negative, clockwise curvature 4 and the positive, counterclockwise curvature 6. In the depicted embodiment, the curvature of each of the flank lines 30, 40 has two inflection point 32, 42, as is best visible in Fig. 1b.

In at least a section of the cylindrical pitch surface 10, the first curvature 30 and the second curvature 40 have identical signs. The respective section of the cylindrical pitch surface 10 is also referred to as the first section 14 of the cylindrical pitch surface 10. The first section 14 of the cylindrical pitch surface 10 is spanned by the circumferential direction c and a first section w1 of the width w of the cylindrical pitch surface 10.

In the depicted first embodiment, both the first flank line 30 and the second flank line 40 exhibit a negative, clockwise curvature 6 in the first section 14 of the cylindrical pitch surface 10.

Moreover, the cylindrical gear 2 according to the depicted first embodiment comprises two second sections 16. In those second sections 16, the curvatures of the first flank line 30 and of the second flank line 40 have the same sign, which is opposite to the sign of their respective curvatures in the first section 14. In other words, both the first flank line 30 and the second flank line 40 exhibit a positive, counterclockwise curvature 4 in the second sections 16, which is opposite to their negative, clockwise curvature 6 in the first section 14 of the cylindrical pitch surface 10.

The inventors have found that the cylindrical gear 2 with the described shape, as illustrated in terms of the cylindrical pitch surface 10, in terms of the first section 14 of the cylindrical pitch surface 10, in terms of the flank lines 30, 40 and in terms of their respective curvatures, has several surprising advantages over conventional gears. Both the wear and the noise during operation are reduced, for example as compared to a herringbone gear. This is achieved by providing flat sections of the flank lines 30, 40 (which, according to the first embodiment, are located in the center and at the ends of the flank lines 30, 40) and steep sections of the flank lines 30, 40 (which, according to the first embodiment, are located near the inflection points 32, 42 of the flank lines 30, 40). During operation, the flat sections provide a sufficient contact area to transfer force and/or torque while avoiding high local stress/strain, thus reducing wear. The steep sections ensure a sufficient extension of the teeth 20 along the circumferential direction c to enhance the contact ratio (i.e., the average number of teeth 20 in contact with the teeth of a meshing gear) and reduce noise. Conventional gears aim at either providing a large contact area for avoiding high local stress/strain, or at enhancing the contact ratio to reduce noise. Surprisingly, the cylindrical gear 2 provides both a reduced local stress/strain and a noise reduction, without compromising between the two advantages.

A reference plane 8 is perpendicular to the axis 12 of the cylindrical gear 2. In the depicted embodiment, the axis 12 coincides with the z-axis of the coordinate system, and the reference plane 8 coincides with the x-y-plane. The reference plane 8 is defined at half the width of the cylindrical gear 2, as is best visible in Fig. 1b.

The cylindrical gear 2 according to the depicted first embodiment is symmetrical about the reference plane 8. Consequently, during operation no thrust is generated along the axial direction 12 when the cylindrical gear 2 according to the first embodiment meshes another symmetrical gear. In many applications, such an axial thrust is undesired. The cylindrical gear 2, which is symmetrical about the reference plane 8, is designed to avoid the potentially undesired thrust.

The symmetrical shape is achieved by placing an even number of inflection points 32, 42 symmetrically about the reference plane 8 when designing the cylindrical gear 2.

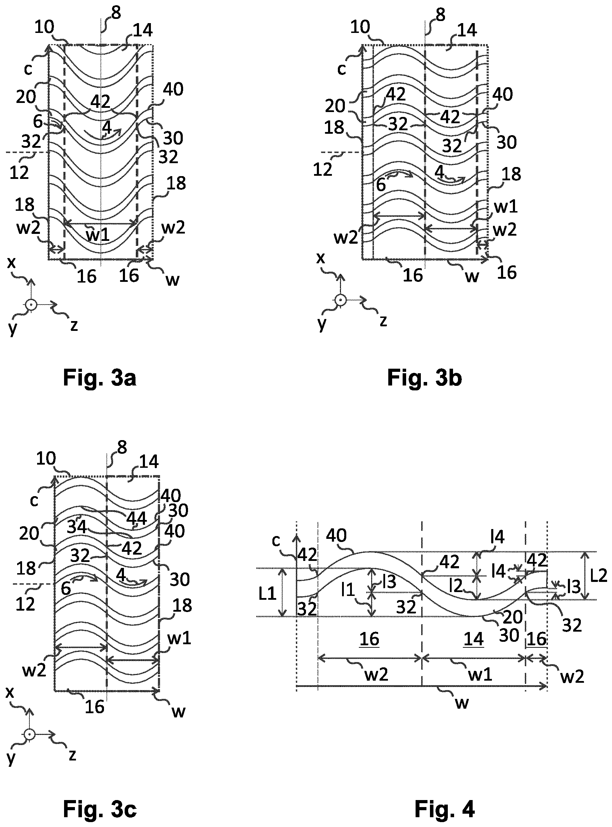

The shape of the first flank line 30 and of the second flank line 40 according to the first embodiment corresponds to a polynomial function. This shape is best visible when the first/second flank is projected onto the cylindrical pitch surface 10, e.g. along the cartesian y axis as shown in Fig. 1b, or, preferably, along the radial direction as illustrated in Fig. 3a. The polynomial function is of sixth order, comprising only the even terms (second, fourth, and sixth order) when the origin of the coordinate system is located on the reference plane 8 and on the cylindrical pitch surface 10. To achieve the advantages described above, it is not required that the shape follows the polynomial function exactly, but minor deviations are possible. In alternative embodiments (not shown), the shape of the first flank line 30 and of the second flank line 40 corresponds to a polynomial function of fourth order, comprising only the even terms (second and fourth order). Again, minor deviations are possible.

The polynomial function of at least fourth order ensures the occurrence of the inflection points 32, 42.

The polynomial function comprising only the even terms ensures the symmetry about the reference plane 8.

In alternative embodiments (not shown), the cylindrical gear 2 is not symmetrical about the reference plane. More specifically, the inflection points 32, 42 are not arranged symmetrically about the reference plane 8.

This may be achieved by introducing uneven terms (e.g., first-order and/or third-order and/or fifth-order terms) in the shape of the first flank line 30 and of the second flank line 40 corresponding to the polynomial function.

A shape of the cylindrical gear 2 which is not symmetrical about the reference plane 8 is used to implement a cylindrical gear 2 which produces a thrust along the direction of the axis 12 during operation. This may be desirable in applications wherein the cylindrical gear 2 is mounted on a shaft 52 rotatably arranged in a roller bearing. Depending on the specific type of roller bearing, the performance and durability of the respective roller bearing can be improved by applying an axial thrust thereto. In applications where a respective axial thrust onto the roller bearing is desired, it can be provided by the cylindrical gear 2 which is not symmetrical about the reference plane 8.

The cylindrical gear 2 according to the depicted embodiment is typically produced using additive manufacturing. Prototypes have been made from plastic. Additive manufacturing techniques for metal are known in the prior art and may as well be used for the cylindrical gear 2. Alternative, subtractive manufacturing techniques are possible, although demanding because of the curved shape of the flank lines 30, 40 of the cylindrical gear 2.

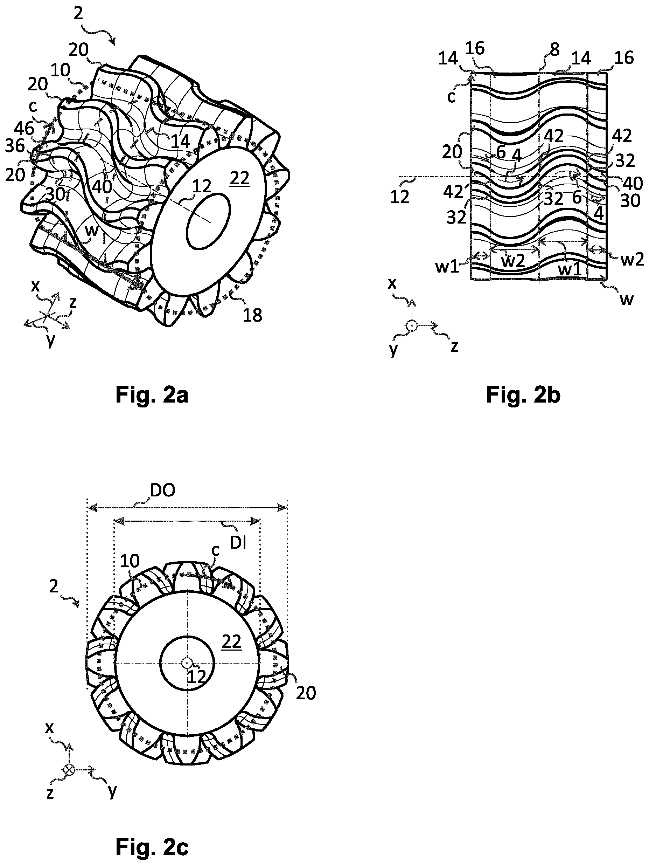

Fig. 2a, Fig. 2b, and Fig. 2c illustrate a cylindrical gear 2 according to a second embodiment. Fig. 2a gives a perspective view. Fig. 2b and Fig. 2c show side views.

The cylindrical gear 2 according to the second embodiment is similar to the cylindrical gear 2 of the first embodiment. To avoid repetition, similar elements are not described again, but reference is made to the description of the first embodiment above.

In contrast to the flank lines 30, 40 of the first embodiment, whose curvatures 30, 40 exhibit an even number of inflection points 32, 42 (more specifically, two inflection points), the flank lines 30, 40 of the second embodiment each exhibit an odd number of inflection points 32, 42.

In the depicted example of the cylindrical gear 2 according to the second embodiment, the flank lines 30, 40 each exhibit three inflection points 32, 42. However, according to alternative embodiments (e.g., the embodiment of Fig. 3c), the flank lines 30, 40 each exhibit one respective inflection point 32, 42, i.e., only the central inflection point 32, 42 of Fig. 2b closest to the reference plane 8, but not the inflection points 32, 42 of Fig. 2b more distant from the reference plane 8.

The odd number of inflection points 32, 42 gives rise to a wave-like shape of the flank lines 30, 40. The protruding portions of the respective teeth 20 provide the flat sections described above, with the advantages laid out above. The steep sections in between, comprising the inflection points 32, 42, ensure a significant circumferential extension of the teeth 20, with the advantages laid out above.

The flank lines 30, 40 according to the depicted second embodiment are antisymmetrical about a reference plane 8, and so are their respective curvatures. The antisymmetrical shape refers to a shape wherein each of the flank lines 30, 40 on one side of the reference plane 8 corresponds to the mirror image of the respective flank lines 30, 40 on the other side of the reference plane 8, when mirrored both about the reference plane 8 and about a plane comprising the axis 12 and the center of the respective flank line 30, 40.

The anti-symmetrical shape is achieved by placing an odd number of inflection points 32, 42 symmetrically about the reference plane 8 when designing the cylindrical gear 2.

The anti-symmetrical shape of the flank lines 30, 40, and consequently of the cylindrical gear 2, avoids potentially unwanted axial thrust.

The shape of the first flank line 30 and of the second flank line 40 according to the first embodiment corresponds to a sine function or a cosine function or a combination thereof. This is best seen in a projection of the respective flank line 30, 40 onto the cylindrical pitch surface 10, e.g., a projection along a cartesian axis y perpendicular to the axis 12 of the cylindrical gear 2 as shown in Fig. 2b, or, preferably, a projection along a radial direction perpendicular to the axis 12 of the cylindrical gear 2 as shown in Fig. 3b. Minor deviations of the flank lines 30, 40 from the exact sine/cosine shape are possible.

In the depicted embodiment, the amplitudes and signs of the sine function and/or cosine function are selected to ensure the antisymmetry about the reference plane 8.

In alternative embodiments (not shown), the cylindrical gear 2 of the second embodiment is not antisymmetrical about the reference plane. More specifically, the inflection points 32, 42 are not arranged symmetrically about the reference plane 8.

This may be achieved by adjusting the amplitudes in the phases of the sine function and/or cosine function determining the shape of the first flank line 30 and of the second flank line 40.

Fig. 3a, Fig. 3b, and Fig. 3c schematically illustrate projections of the flank lines 30, 40 of cylindrical gears 2 according to three different embodiments onto the cylindrical pitch surface 10 of the respective cylindrical gear 2.

The projections of Fig. 3a, Fig. 3b, and Fig. 3c have been made along the radial direction extending away perpendicularly from the axial direction 12, such that the radial direction is perpendicular to both the circumferential direction c and the width direction w at each point on the cylindrical pitch surface 10.

Fig. 3a illustrates a cylindrical gear 2 similar to the one according to the first embodiment.

Fig. 3b illustrates a cylindrical gear 2 similar to the one according to the second embodiment.

Fig. 3c illustrates a cylindrical gear 2 similar to the one according to the second embodiment, but with only one inflection point 32 of the first flank 30 and only one inflection point 42 of the second flank 40.

In Fig. 3c, local extrema 34 of the first flank line 30 are indicated. Moreover, local extrema 44 of the second flank line 40 are indicated. The local extrema are indicated and described in the context of the embodiment of Fig. 3c, but they can be defined accordingly for the cylindrical gear 2 according to any other embodiment.

The local extrema 34, 44 correspond to points on the respective flank line 30, 40, at which the respective flank line 30, 40 has the largest distance from a line along the direction of the width w, wherein the position of said line along the circumferential direction reflects the average position of the respective flank line 30, 40 along the circumferential direction c. As can be seen from the projections of Fig. 3a, Fig. 3b, and Fig. 3c, the respective distances and average positions are most easily defined along the circumferential direction c according to the projection along the radial direction.

The local extrema 34, 44 respective flank line 30, 40 in Fig. 3c are strict local extrema 34, 44, i.e., in the vicinity of the respective local extremum 34, 44, the respective flank line 30, 40 comes closer to its average position with increasing distance from the local extremum 34, 44 for both directions along the respective flank line 30, 40.

The flank lines 30, 40 of the cylindrical gear 2 according to the embodiment of Fig. 3c each comprise two local extrema 34, 44. The respective local extrema 34, 44 are all strict local extrema 34, 44.

The flank lines 30, 40 of the cylindrical gear 2 according to the embodiment of Fig. 3b each comprise four local extrema (not indicated), two of them corresponding to the local extrema 34, 44 of the embodiment of Fig. 3c, and two additional local extrema at the edges 18 of the cylindrical pitch surface 10. The local extrema corresponding to the local extrema 34, 44 of the embodiment of Fig. 3c are strict local extrema 34, 44. The two additional local extrema at the edges 18 of the cylindrical pitch surface 10 are not strict local extrema, as the respective flank line 30, 40 only comes closer to its average position for one direction along the respective flank line 30, 40, namely along the direction towards the reference plane 8.

The flank lines 30, 40 of the cylindrical gear 2 according to the embodiment of Fig. 3a each comprise three local extrema (not indicated), one on the reference plane 8, and two additional local extrema at the edges 18 of the cylindrical pitch surface 10. The local extrema on the reference plane 8 are strict local extrema. The additional local extrema at the edges 18 of the cylindrical pitch surface 10 are not strict local extrema, as the respective flank line 30, 40 only comes closer to the average position of the respective flank line 30, 40 for one direction along the respective flank line 30, 40, namely along the direction towards the reference plane 8. In alternative embodiments, the additional local extrema are not located exactly on the edges 18, but closer to the reference plane 8, such that they form strict local extrema.

Fig. 4 gives a detailed view of flank lines 30, 40 of a cylindrical gear 2 according to an embodiment similar to the second embodiment.

Fig. 4 illustrates the total circumferential extensions L1, L2 and the local circumferential extensions l1, l2, l3, l4 of the flank lines 30, 40. Although the illustration is given in Fig. 4 with respect to a specific embodiment similar to the second embodiment, the total circumferential extensions L1, L2 and the local circumferential extensions l1, l2, l3, l4 of the flank lines 30, 40 are defined correspondingly for the other embodiments, although not indicated therein by reference numerals.

To determine the total circumferential extension L1 of the first flank line 30 (also referred to as the first total circumferential extension L1), the two points on the first flank line 30 with the largest separation along the circumferential direction c are determined. The total circumferential extension L1 of the first flank line 30 is then given by this largest separation along the circumferential direction c.

The total circumferential extension L2 of the second flank line 40 (also referred to as the second total circumferential extension L2) is defined accordingly.

To determine the local circumferential extension l1 of the first flank line 30 in the first section 14 (also referred to as the first local circumferential extension l1), the two points on the first flank line 30 within the first section 14 with the largest separation along the circumferential direction c are determined. The local circumferential extension l1 of the first flank line 30 in the first section 14 is then given by this largest separation along the circumferential direction c.

The local circumferential extension l3 of the first flank line 30 in the second section 16 (also referred to as the third local circumferential extension l3) is defined accordingly, i.e., by replacing the first section 14 with the second section 16.

To determine the local circumferential extension l2 of the second flank line 40 in the first section 14 (also referred to as the second local circumferential extension l2), the two points on the second flank line 40 within the first section 14 with the largest separation along the circumferential direction c are determined. The local circumferential extension l2 of the second flank line 40 in the first section 14 is then given by this largest separation along the circumferential direction c.

The local circumferential extension 14 of the second flank line 40 in the second section 16 (also referred to as the fourth local circumferential extension l4) is defined accordingly, i.e., by replacing the first section 14 with the second section 16.

To achieve the effects and advantages described above, the circumferential extensions of the flanks 30, 40 (i.e., the first and second total circumferential extensions L1, L2 and/or the first, second, third, and fourth local circumferential extensions l1, l2, l3, l4) should be larger than variations in the respective circumferential extensions which occur coincidentally/occasionally because of manufacturing tolerances. In other words, the flank lines 30, 40 and their respective curvatures should reflect a macrostructure, rather than a microstructure determined by coincidental/occasional fluctuations within manufacturing tolerances.

Preferably, the respective circumferential extensions amount to at least one percent or to at least two percent or to at least three percent or to at least five percent of a relevant width. In this context, the relevant width is given by the width for determining a slope of the first/second flank line 30, 40 from the respective circumferential extension L1, L2, l1, l2, l3, l4. For the total circumferential extensions L1, L2, the relevant width is the width w of the cylindrical pitch surface 10. For the first and second local circumferential extensions l1, l2, the relevant width is the first section w1 of the width w of the cylindrical pitch surface 10. For the third and fourth local circumferential extensions l3, l4, the relevant width is the second section w₂ of the width w of the cylindrical pitch surface 10.

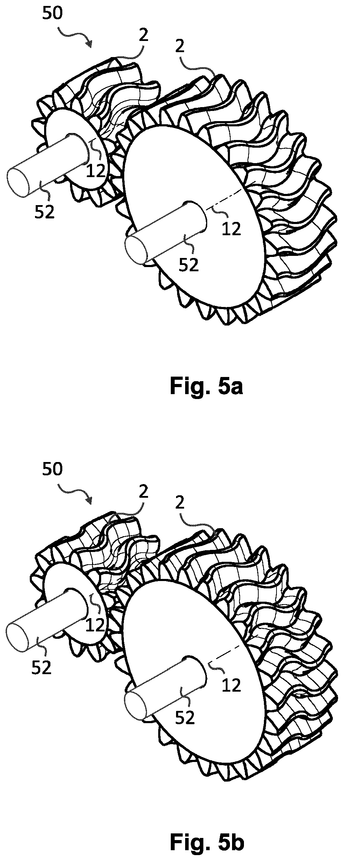

Fig. 5a and Fig. 5b show cylindrical gears 2 of gear trains 50 according to different embodiments. In the gear train 50 of Fig. 5a, the cylindrical gears 2 are similar to the ones according to the first embodiment. In the gear train 50 of Fig. 5b, the cylindrical gears 2 are similar to the ones according to the second embodiment.

A gear train 50 comprises a plurality of gears, whose exact number depends on the specific type of gear train. According to the depicted embodiments, at least two of the respective gears are cylindrical gears 2 as described above. According to alternative embodiments, all the respective gears are cylindrical gears 2 as described above.

The cylindrical gears 2 of the of gear train 50 according to any of the embodiments of Fig. 5a and Fig. 5b are mounted on shafts 52 to intermesh with each other.

In the depicted embodiments, the left flank lines 30 of the first cylindrical gear 2 are complementary to the right flank lines 40 of the second cylindrical gear 2. Consequently, when the first cylindrical gear 2 is rotated such that its left flank lines 30 move towards the right flank lines 40 of the second cylindrical gear 2, the complementary flank lines 30, 40 of the cylindrical gears 2 mesh.

Moreover, in the depicted embodiments, the right flank lines 40 of the first cylindrical gear 2 are complementary to the left flank lines 30 of the second cylindrical gear 2. Consequently, when the first and second gear are rotated along the reverse directions, the respective complementary flank lines 30, 40 of the cylindrical gears mesh.

The complementary flank lines 30, 40 of the first and second cylindrical gear 2 ensure an efficient transfer of torque and/or force between the cylindrical gears 2, making use of a large fraction of the widths w of the teeth 20 of the cylindrical gears 2.

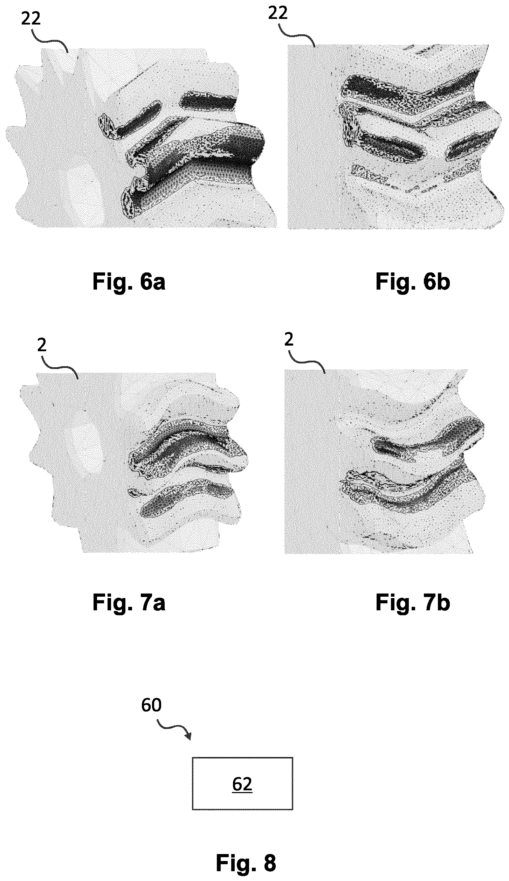

Fig. 6a, Fig. 6b, Fig. 7a, and Fig. 7b compare the stress distribution during operation in herringbone gears 22 of a conventional gear train and in the cylindrical gears 2 of a gear train 50 according to the description.

Fig. 6a and Fig. 6b depict the stress distribution in intermeshing herringbone gears 22 of a gear train. Fig. 6a gives an overview, and Fig. 6b gives a closeup.

Fig. 7a and Fig. 7b depict the stress distribution in intermeshing cylindrical gears 2 (i.e., cylindrical gears 2 according to this disclosure) of a gear train 50. Fig. 7a gives an overview, and Fig. 7b gives a closeup. The cylindrical gears 2 of Fig. 7a, Fig. 7b are similar to the cylindrical gears 2 of the first embodiment described above.

In Fig. 6a, Fig. 6b, Fig. 7a, and Fig. 7b, darker regions indicate regions of higher local stress, and brighter regions indicate regions of lower local stress.

As can be seen from Fig. 6a, Fig. 6b, Fig. 7a, and Fig. 7b, the stress caused by the transfer of force/torque during operation distributes over a larger region in the cylindrical gears 2 than in the herringbone gears 22. Consequently, the maximum local stress occurring in the cylindrical gears 2 is more than 20% lower than in the herringbone gears 22.

The noise produced by a gear train 50 similar to the one of Fig. 5a (i.e., with cylindrical gears 2 similar to the ones of the first embodiment), a gear train 50 similar to the one of Fig. 5b (i.e., with cylindrical gears 2 similar to the ones of the second embodiment), and of a corresponding gear train composed of herringbones gears has been measured and compared. The following noise levels have been determined:

| | |
|---|---|
| gear train 50 similar to the one of Fig. 5a: | 52.7 dB |
| gear train 50 similar to the one of Fig. 5b: | 51.8 dB |
| gear train composed of herringbone gears: | 55.3 dB. |

Moreover, the abrasion to gear train 50 similar to the one of Fig. 5a (i.e., with cylindrical gears 2 similar to the ones of the first embodiment), a gear train 50 similar to the one of Fig. 5b (i.e., with cylindrical gears 2 similar to the ones of the second embodiment), and to a corresponding gear train composed of herringbone gears has been measured and compared. The following abrasions have been determined:

| Type of gear train | Abration at: | top land | bottom land | flank |
|---|---|---|---|---|
| gear train 50 similar to the one of Fig. 5a: | | 0.074 mm | 0.028 mm | 0.091 mm |
| gear train 50 similar to the one of Fig. 5b: | | 0.063 mm | 0.021 mm | 0.071 mm |
| gear train composed of herringbone gears: | | 0.088 mm | 0.029 mm | 0.153 mm. |

The measurements provide evidence of the reduced wear, abrasion and noise production during use of the cylindrical gear 2 according to this description.

Fig. 8 illustrates a method 60 of using a gear train.

At step 62, a shaft that the first cylindrical gear 2 or the second cylindrical gear 2 is mounted on is rotated.

### LIST OF REFERENCE SIGNS

- 2: cylindrical gear
- 4: negative, clockwise curvature
- 6: positive, counterclockwise curvature
- 10: cylindrical pitch surface
- 12: axis of the cylindrical gear
- 14: first section of the cylindrical pitch surface
- 16: second section of the cylindrical pitch surface
- 18: edge of the cylindrical pitch surface
- 20: teeth
- 22: body of the cylindrical gear
- 30: first flank line
- 32, 42: inflection point of the first/second curvature
- 36: first side of tooth
- 40: second flank line
- 46: second side of tooth
- c: circumferential direction of the cylindrical pitch surface
- w: width of the cylindrical pitch surface
- w1: first section of width
- w2: second section of width
- DI: inner diameter of the cylindrical gear
- DO: outer diameter of the cylindrical gear
- 44,34: local extrema
- L1,: total circumferential extension of first flank line
- L2: total circumferential extension of second flank line
- l1: local circumferential extension of first flank line in first section
- l2: local circumferential extension of second flank line in first section
- l3: local circumferential extension of first flank line in second section
- l4: local circumferential extension of second flank line in second section
- 50: gear train
- 22: herringbone gear

## Claims

1. A cylindrical gear (2), comprising:
a cylindrical pitch surface (10), corresponding to a lateral surface of a cylinder and defining a circumferential direction (c) and a width (w) of said lateral surface, the cylindrical pitch surface (10) comprising a first section (14), wherein the first section (14) is spanned by the circumferential direction (c) and a first section (w1) of the width (w) of the cylindrical pitch surface (10); and
teeth (20) arranged along the cylindrical pitch surface (10), wherein each tooth (20) of said teeth (20) comprises:
a first flank line (30) on a first side of the tooth (20), and
a second flank line (40) on a second side of the tooth (20) opposite to the first side,
wherein the first flank line (30) is curved with a first curvature and the second flank line (40) is curved with a second curvature,
wherein each of the first curvature and the second curvature is non-constant and comprises at least one inflection point (32, 42) at which the sign of the respective curvature (30, 40) changes between a negative, clockwise curvature (4) and a positive, counterclockwise curvature (6), and
wherein, in the first section (14), the first curvature (30) and the second curvature (40) have identical signs.

2. The cylindrical gear (2) according to claim 1, wherein the cylindrical pitch surface (10) comprises at least one second section (16),
wherein each of the at least one second section (16) is spanned by the circumferential direction (c) and a respective second section (w2) of the width (w) of the cylindrical pitch surface (10);
wherein the second section (w2) of the width (w) is non-overlapping with the first section (w1) of the width (w), for example for each one of the at least one second sections (16);
wherein, in the at least one second section (16), the first curvature and the second curvature have identical signs;
wherein the sign of the first curvature and of the second curvature in the at least one second section (16) is opposite to the sign of the first curvature and of the second curvature in the first section (14); and
wherein, optionally, the second section (w2) of the width (w) of the cylindrical pitch surface (10) extends from a first inflection point (32, 42) of the first flank line (30) and/or of the second flank line (40) to another inflection point (32, 42) of the respective flank line (30, 40), or, if, for a given direction from the first inflection point (32, 42), no other inflection point (32, 42) of the respective flank line (30, 40) exists, to an edge (18) of the cylindrical pitch surface (10); the first inflection point (32, 42) and, if existent, the other inflection point (32, 42) being excluded from the second section (w2) of the width (w).

3. The cylindrical gear (2) according to claim 2, wherein the cylindrical pitch surface (10) comprises at least two of said at least one second sections (16),
wherein, along the width (w) of the cylindrical pitch surface (10), the at least two second sections (16) are arranged on opposite sides of the first section (14).

4. The cylindrical gear (2) according to any of the preceding claims,
further comprising a reference plane (8), wherein the reference plane (8) is perpendicular to an axis (12) of the cylindrical gear (2) and intersects the cylindrical gear (2) at half the width (w) of the cylindrical pitch surface (10); and
wherein at least one inflection point (32, 42) of the first curvature and/or of the second curvature is arranged on the reference plane (8); and/or
wherein the first curvature and/or the second curvature comprise(s) several of said at least one inflection points (32, 42), and wherein the several inflection points (32, 42) of the first curvature and/or of the second curvature are arranged symmetrically about the reference plane (8); and/or
wherein the first curvature and/or the second curvature is/are asymmetric about the reference plane (8), such that a thrust is generated along the axis (12) of the cylindrical gear (2) when the cylindrical gear (2) is enmeshed coaxially with a second, identical cylindrical gear (2) and rotated.

5. The cylindrical gear (2) according to claim 4 in combination with claim 2,
wherein the first flank line (30) in the first section (14) is antisymmetrical about the reference plane (8) to the first flank line (30) in the second section (16); and/or
wherein the second flank line (40) in the first section (14) is antisymmetrical about the reference plane (8) to the second flank line (40) in the second section (16).

6. The cylindrical gear (2) according to any of the preceding claims,
wherein the first flank line (30) and the second flank line (40) of each tooth (20) of the teeth (20) are parallel to each other, for example, in the first section (14) and/or in at least one or all of the at least one second section (16), or along at least 80% of the width (w) of the cylindrical pitch surface (10), or along at least 90% of the width (w) of the cylindrical pitch surface (10), or along the entire width (w) of the cylindrical pitch surface (10); and/or
wherein the first section (w1) of the width (w) of the cylindrical pitch surface (10) extends from a second inflection point (32, 42) of the first flank line (30) or of the second flank line (40) to another inflection point (32, 42) of the respective flank line (30, 40), or, if, for a given direction from the second inflection point (32, 42), no other inflection point (32, 42) of the respective flank line (30, 40) exists, to an edge (18) of the cylindrical pitch surface (10); the second inflection point (32, 42) and, if existent, the other inflection point (32, 42) being excluded from the first section (w1) of the width (w).

7. The cylindrical gear (2) according to any of the preceding claims,
wherein the first flank line (30) and/or the second flank line (40) comprise(s) at least two local extrema (34, 44), in particular at least two strict local extrema (34, 44); and/or
wherein the first curvature and/or the second curvature comprises at least two inflection points (32, 42) or at least three inflection points (32, 42); and/or
wherein at least one or all of the at least one inflection point (32) of the first flank line (30) of each tooth (20) of the teeth (20) is/are located at a distance from the edges (18) of the cylindrical pitch surface (10), preferably at a distance of at least 3% or of at least 5% or of at least 10% of the width (w) of the cylindrical pitch surface (10); and/or
wherein at least one or all of the at least one inflection point(s) (42) of the second flank line (40) of each tooth (20) of the teeth (20) is/are located at a distance from the edges (18) of the cylindrical pitch surface (10), preferably at a distance of at least 3% or of at least 5% or of at least 10% of the width (w) of the cylindrical pitch surface (10); and/or
wherein the first flank line (30) of each tooth (20) of the teeth (20) has a first slope changing along the first flank line (30), and the second flank line (40) of each tooth (20) of the teeth (20) has a second slope changing along the second flank line (40), and wherein the first slope and/or the second slope have their/has its maximum at a distance from the edges (18) of the cylindrical pitch surface (10), preferably at a distance of at least 3% or of at least 5% or of at least 10% of the width (w) of the cylindrical pitch surface (10).

8. The cylindrical gear (2) according to any of the preceding claims,
wherein the first flank line (30) of each tooth (20) of the teeth (20) has a first total circumferential extension (L1), the first total circumferential extension (L1) corresponding to the largest separation along the circumferential direction (c) between any two points on the first flank line (30);
wherein the second flank line (40) of each of the teeth (20) has a second total circumferential extension (L2), the second total circumferential extension (L2) corresponding to the largest separation along the circumferential direction (c) between any two points on the second flank line (40); and
wherein the first total circumferential extension (L1) and/or the second total circumferential extension (L2) amount(s) to at least one percent of the width (w) of the cylindrical pitch surface (10) or to at least two percent of the width (w) of the cylindrical pitch surface (10) or to at least three percent of the width (w) of the cylindrical pitch surface (10) or to at least five percent of the width (w) of the cylindrical pitch surface (10).

9. The cylindrical gear (2) according to any of the preceding claims,
wherein, according to a first alternative:
the first flank line (30) of each tooth (20) of the teeth (20) has a first local circumferential extension (l1) associated with the first section (14), the first local circumferential extension (l1) corresponding to the largest separation along the circumferential direction (c) between any point on the first flank line (30) within the first section (14) and the inflection point (32) of the first flank line (30) closest to the respective point on the first flank line (30);
the second flank line (40) of each tooth (20) of the teeth (20) has a second local circumferential extension (l2) associated with the first section (14), the second local circumferential extension (l2) corresponding to the largest separation along the circumferential direction (c) between any point on the second flank line (40) within the first section (14) and the inflection point (42) of the second flank line (40) closest to the respective point on the second flank line (40); and
the first local circumferential extension (l1) and/or the second local circumferential extension (l2) amount(s) to at least one percent of the first section (w1) of the width (w) of the cylindrical pitch surface (10) or to at least two percent of the first section (w1) of the width (w) of the cylindrical pitch surface (10) or to at least three percent of the first section (w1) of the width (w) of the cylindrical pitch surface (10) or to at least five percent of the first section (w1) of the width (w) of the cylindrical pitch surface (10);
and/or wherein, according to a second alternative, wherein the cylindrical gear (2) is the cylindrical gear (2) according to claim 2 or 3:
for any of the at least one second section (16), the first flank line (30) of each tooth (20) of the teeth (20) has a third local circumferential extension (l3) associated with the respective second section (16), the respective third local circumferential extension (l3) corresponding to the largest separation along the circumferential direction (c) between any point on the first flank line (30) within the respective second section (16) and the inflection point (32) of the first flank line (30) closest to the respective point on the first flank line (30);
for any of the at least one second section (16), the second flank line (40) of each tooth (20) of the teeth (20) has a fourth local circumferential extension (14) associated with the respective second section (16), the respective fourth local circumferential extension (14) corresponding to the largest separation along the circumferential direction (c) between any point on the second flank line (40) within the respective second section (16) and the inflection point (42) of the second flank line (40) closest to the respective point on the second flank line (40); and
the third local circumferential extension(s) (l3) and/or the fourth local circumferential extension(s) (14) associated with one or all of the at least one second sections (16) amount(s) to at least two percent of the second section (w2) of the width (w) of the cylindrical pitch surface (10) associated with the corresponding second section(s) (16), or to at least three percent of the second section (w2) of the width (w) of the cylindrical pitch surface (10) associated with the corresponding second section(s) (16), or to at least five percent of the second section (w2) of the width (w) of the cylindrical pitch surface (10) associated with the corresponding second section(s) (16).

10. The cylindrical gear (2) according to any of the preceding claims,
wherein the cylindrical pitch surface (10) is arranged between an inner diameter (DI) and an outer diameter (DO) of the cylindrical gear (2), such as halfway in between the inner diameter (DI) and the outer diameter (DO) of the cylindrical gear (2); and/or
wherein the first flank line (30) is a left flank line (30), and the second flank line (40) is a right flank line (40); and/or
wherein the first curvature and/or the second curvature are determined according to a projection of the respective flank line (30, 40) of the respective tooth (20) onto the cylindrical pitch surface (10),
wherein, optionally, the projection onto the cylindrical pitch surface (10) is a projection along a radial direction of the cylindrical gear (2) or a projection along a cartesian direction perpendicular to an axis (l2) of the cylindrical gear (2); preferably a projection along a radial direction of the cylindrical gear (2) perpendicular to an axis (l2) of the cylindrical gear (2) and perpendicular to the circumferential direction (c) at each point of the cylindrical pitch surface (10); and/or
wherein the first curvature and the second curvature are determined along a direction from a same, first edge (18) of the cylindrical pitch surface (10) to the same, opposite edge (18) of the cylindrical pitch surface (10), for example according to said projection onto the cylindrical pitch surface (10); and/or
wherein the first flank line (30) and/or the second flank line (40) refers to an intersection curve between a side wall on the respective side of the respective tooth (20) and the cylindrical pitch surface (10); and/or
wherein the first flank line (30) and/or the second flank line (40) refers to a boundary curve between a flank on the respective side of the respective tooth (20) and a face on the respective side of the respective tooth (20).

11. The cylindrical gear (2) according to any of the preceding claims,
wherein, according to a first alternative:
the first flank line (30) and/or the second flank line (40) have/has a shape reflecting a polynomial function, preferably with a deviation between the polynomial function and the shape of the first flank line (30) and/or of the second flank line (40) of no more than 20% or no more than 10% or no more than 5% of the first total circumferential extension (L1) and/or of the second total circumferential extension (L2) and/or of the first local circumferential extension (l1) and/or of the second local circumferential extension (l2), for example wherein the polynomial function is of an order no more than 6 or of no more than 5 or of no more than 4 and/or wherein the polynomial function is of an order of at least 3 or of at least 4; or
wherein, according to a second alternative:
the first flank line (30) and/or the second flank line (40) have/has a shape reflecting a sine function or a cosine function or a sum of the sine function and the cosine function, preferably with a deviation between the sine function or the cosine function or the sum of the sine function and the cosine function and the shape of the first flank line (30) and/or of the second flank line (40) of no more than 20% or of no more than 10% or of no more than 5% of the first total circumferential extension (L1) and/or of the second total circumferential extension (L2) and/or of the first local circumferential extension (l1) and/or of the second local circumferential extension (l2).

12. A gear train (50) comprising a plurality of cylindrical gears (2), the plurality of cylindrical gears (2) comprising a first cylindrical gear (2) and a second cylindrical gear (2),
wherein each of the first cylindrical gear (2) and the second cylindrical gear (2) is a cylindrical gear (2) according to any of the preceding claims, and
wherein the first cylindrical gear (2) and the second cylindrical gear (2) are arranged such that they intermesh with each other,
wherein, optionally:
a first axis (l2) of the first cylindrical gear (2) is parallel to a second axis (l2) of the second cylindrical gear (2); and/or:
the first flank line (30) of the first cylindrical gear (2) is complementary to a first one of: the first flank line (30) of the second cylindrical gear (2) or the second flank line (40) of the second cylindrical gear (2); and/or:
the second flank line (30) of the first cylindrical gear (2) is complementary to a second one of: the first flank line (30) of the second cylindrical gear (2) or the second flank line (40) of the second cylindrical gear (2).

13. A method (60) of using a gear train (50) according to claim 12, wherein the method (50) comprises:
rotating (62) a shaft (52) that the first cylindrical gear (2) or the second cylindrical gear (2) is mounted on, preferably such that an orientation of an axis of the shaft (52) is perpendicular to the circumferential direction (c) of the cylindrical pitch surface (10) of the first cylindrical gear (2) and/ or of the second cylindrical gear (2).

14. The method (60) according to claim 13, which further comprises:
generating, from the rotation of the shaft (52), a thrust onto the shaft (52) along an axial direction of the shaft (52).

15. The method according to claim 13 or 14,
wherein a pitch line velocity of the first cylindrical gear (2) and/or of the second cylindrical gear (2) exceeds 25 m/s; and/or
wherein the method further comprises a self-centering of the first cylindrical gear (2) and/or the second cylindrical gear (2).
